# FASCICULE DE BREVET EUROPEEN

(11) **EP 2 717 237 B1**
(45) Date de publication et mention de la délivrance du brevet: **24.03.2021**
(21) Numéro de dépôt: 13187004.0
(22) Date de dépôt: 02.10.2013
(51) Int. Cl.: G08B 21/02, G08B 21/04

(54) **Système de transmission d'alerte**
Warnsignal-Übertragungssystem
System for transmitting an alert

(30) Priorité: 03.10.2012 FR 1259380
(43) Date de publication de la demande: 09.04.2014
(73) Titulaire: Commissariat à l'Énergie Atomique et aux Énergies Alternatives, 75015 Paris (FR)
(72) Inventeur: Daniele, Norbert, 38190 Bernin (FR)
(74) Mandataire: Colombo, Michel

(56) Documents cités:
- WO-A1-2008/117253
- WO-A1-2011/060388
- WO-A2-2009/136259
- US-A- 5 144 323
- US-A1- 2005 258 958
- US-A1- 2008 316 040

## Description

L'invention concerne un système de transmission d'alerte apte à fonctionner en absence de réseau cellulaire ainsi qu'une balise d'alerte pour ce système. L'invention a également pour objet un sac à dos incorporant cette balise d'alerte.

Par réseau cellulaire on désigne les réseaux de téléphonie mobile tels que ceux utilisant les normes GSM (Global System for Mobile Communications), GPRS (General Packet Radio Service), UMTS (Universal Mobile Télécommunications System), LTE (Long Term Evolution). Typiquement, un réseau cellulaire est divisé spatialement en une multitude de cellules radio mitoyennes dans lesquels les mêmes fréquences sont utilisées pour téléphoner.

Les systèmes de transmission d'alerte en absence de réseau cellulaire sont utilisés pour prévenir les services de secours en cas d'accident. Il existe un grand nombre de systèmes de transmission d'alerte utilisés, en particulier, dans le cadre d'activité en plein air telle que la randonnée, le vélo, la planche à voile ou autre. En effet de telles activités ont fréquemment lieu dans des endroits non couverts par un réseau cellulaire.

Des systèmes connus comportent :
- au moins un talkie-walkie apte à être transporté directement par un être humain, ce talkie-walkie comprenant :
   - un émetteur-récepteur radioélectrique apte à écouter directement au moins un canal utilisé pour échanger en alternat des signaux audio avec d'autres talkies-walkies, et
   - un haut-parleur apte à transformer le signal audio reçu sur ce canal en un message vocal directement perceptible par un être humain qui transporte ce talkie-walkie,
- une balise d'alerte directement transportable par un être humain, différent de celui transportant le talkie-walkie, lors d'une activité en plein air, cette balise comprenant :
   - un module de géo-localisation apte à générer des coordonnées, sous la forme d'une succession de symboles numériques, correspondant à la position actuelle de la balise sur la surface terrestre avec une résolution inférieure à 500 m, et
   - un circuit d'émission apte à produire un signal d'alerte contenant les coordonnées générées et à transmettre ce signal d'alerte produit sous la forme d'un signal audio sur le même canal que celui utilisé par le talkie-walkie.

De tels systèmes sont, par exemple, utilisés dans les talkie-walkie « Rino 110 ®» de la société Garmin ®.

Ce système présente cependant plusieurs inconvénients. Par exemple, dans ce système la balise d'alerte est un talkie-walkie identique aux autres. Il comporte donc un récepteur et un écran pour afficher des coordonnées GPS. A cause de ces éléments, il est encombrant et peut s'avérer peu pratique à transporter lors d'une activité de plein air. De plus, dans ce système connu, les coordonnées GPS ne peuvent être restituées à une personne sous une forme directement compréhensible par cette personne que si celle-ci est aussi équipée d'un talkie-walkie « Rino 110 ®». Par contre, d'autres talkies-walkies d'une autre marque ne peuvent pas restituer le signal d'alerte transmis par un tel talkie-walkie « Rino 110 » de façon directement compréhensible par un être humain. Ainsi, si les personnes à proximité de l'accident sont uniquement équipées de talkie-walkie de cette autre marque, elles ne peuvent pas être prévenues de l'accident et connaître sa localisation. On perd ainsi des chances de secourir la victime de l'accident.

De l'état de la technique est également connu de US2005/258958A1, US2008/316040A1, WO2009/136259A2, US5144323 et WO2011/060388A1. US2008/316040 divulgue le préambule de la revendication 1 et, en particulier, le déclenchement automatique de l'émission d'un signal d'alerte à partir des mesures d'un capteur tel qu'un accéléromètre. Toutefois, un tel déclenchement automatique de l'émission du signal d'alerte peut aussi provoquer des déclenchements intempestifs et inutiles de l'émission du signal d'alerte. US5144323 divulgue l'utilisation de message d'alerte audio.

L'invention vise à remédier à cet inconvénient. Elle a donc pour objet un système de transmission d'alerte apte à fonctionner en absence de réseau cellulaire conforme à la revendication 1.

Dans le système ci-dessus, puisque le signal d'alerte comporte les transcriptions audio des coordonnées générées par le module de géo-localisation, ces coordonnées peuvent être restituées sous la forme d'un message vocal par n'importe quel talkie-walkie. Ainsi, dans ce système de transmission d'alerte, le signal d'alerte comportant les coordonnées de la balise d'alerte peut être restitué par tout type de talkie-walkie et non pas seulement par ceux spécialement conçus à cet effet. On augmente ainsi sensiblement la probabilité qu'une personne située à proximité de l'accident puisse porter secours à la victime ou prévenir les services de secours.

Les modes de réalisation de ce système peuvent comporter une ou plusieurs des caractéristiques des revendications dépendantes.

Ces modes de réalisation présentent en outre les avantages suivants :
- le raccordement par une liaison filaire ou sans fil du Talkie Walkie à un module de cartographie permet d'afficher la position de la victime à secourir sur une carte ce qui facilite sa localisation ;
- l'utilisation d'un clé amovible permet de transformer un appareil standard, tel qu'un téléphone, en un appareil utilisable pour secourir la victime.

L'invention a également pour objet une balise d'alerte pour le système de transmission d'alerte ci-dessus.

Les modes de réalisation de cette balise d'alerte peuvent comporter une ou plusieurs des caractéristiques des revendications dépendantes.

Ces modes de réalisation de la balise d'alerte présentent en outre les avantages suivants :
- l'utilisation d'un accéléromètre dans ce module de détection automatique d'un accident permet de déclencher automatiquement la transmission du signal d'alerte en réponse à un choc ;
- transmettre automatiquement le signal d'alerte sur chacun des canaux disponibles permet d'augmenter la probabilité que le message d'alerte soit reçu ;
- réitérer plusieurs fois la transmission du message d'alerte sur un même canal permet également d'accroître la probabilité que le signal d'alerte soit reçu ;
- utiliser une balise dépourvue de haut-parleur, microphone et d'écran limite son encombrement.

L'invention a également pour objet un sac à dos comportant la balise d'alerte ci-dessus fixée sans aucun degré de liberté à une paroi de ce sac à dos.

L'invention sera mieux comprise à la lecture de la description qui va suivre, donnée uniquement à titre d'exemple non limitatif et faite en se référant aux dessins sur lesquels :
- la figure 1 est une illustration schématique d'un système de transmission d'alerte ;
- la figure 2 est une illustration schématique d'une balise d'alerte utilisable dans le système de la figure 1 ;
- la figure 3 est un organigramme d'un procédé de transmission d'alerte à l'aide du système de la figure 1 ;
- la figure 4 est une illustration schématique d'un talkie-walkie susceptible d'être utilisé dans le système de la figure 1 ;
- la figure 5 est une illustration schématique d'un mode de réalisation, selon l'invention, de la balise d'alerte du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

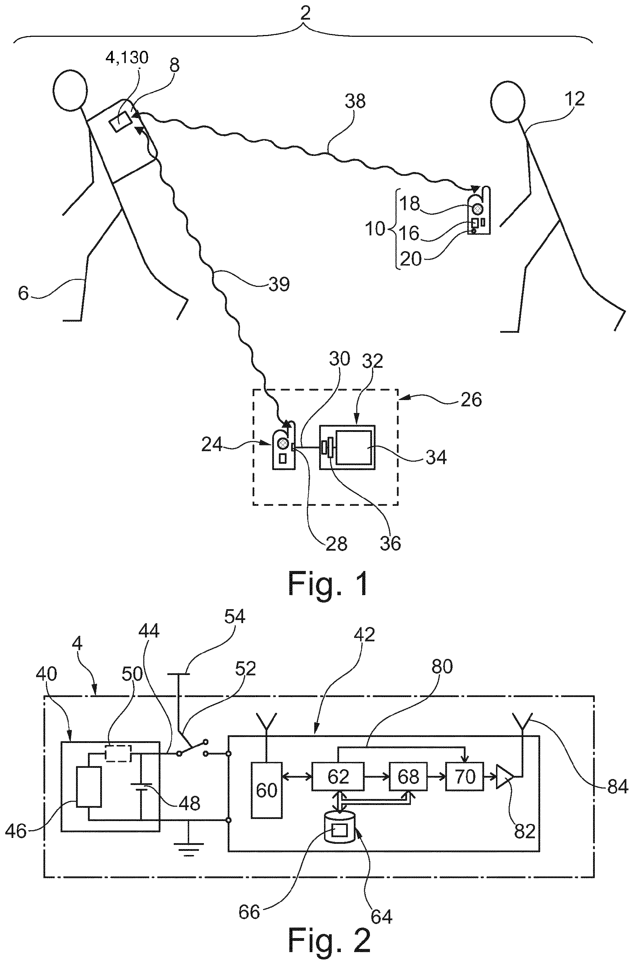

La figure 1 représente un système 2 de transmission d'alerte permettant le déclenchement d'une intervention pour secourir une victime d'un accident. Plus précisément, le système 2 permet de communiquer la position de la victime directement au service de secours ou à des personnes susceptibles de porter secours à la victime ou encore à des personnes susceptibles de relayer cette information vers des services de secours.

Ici, le système 2 est décrit dans le cas particulier où l'accident se produit dans le cadre de la pratique d'une activité de plein air. Plus précisément, le système 2 est illustré dans le cas où l'activité de plein air est la randonnée.

Le système 2 comprend une balise 4 d'alerte portée par une personne 6 en train de randonner. A cet effet, la balise 4 est légère. Elle pèse moins de 1 kg et, typiquement, moins de 200g ou 100g. La balise 4 est capable d'émettre un signal d'alerte dans le cas où cette personne 6 est victime d'un accident. Le signal d'alerte comporte les coordonnées géographiques de la balise 4 pour faciliter la localisation de la victime. Le signal d'alerte est émis sur les mêmes canaux que ceux utilisés par des talkie-walkie. Par conséquent, ce signal d'alerte est susceptible d'être reçu par des talkies-walkies situés dans la zone de couverture de la balise 4. Typiquement, cette zone de couverture est inférieure à 5 km et, généralement, inférieure à 2 ou 1 km. Puisque la balise 4 utilise les mêmes canaux que ceux utilisés par les talkies-walkies, la transmission du signal d'alerte ne nécessite pas d'infrastructures fixes situées à proximité de la balise 4. De plus, la balise 4 peut fonctionner même en dehors des zones de couverture des réseaux téléphoniques cellulaires.

Dans le cas particulier décrit ici, la balise 4 est fixée sans aucun degré de liberté à une paroi d'un sac à dos 8. La balise 4 est décrite plus en détail en référence à la figure 2.

Le système 2 comporte également un ou plusieurs talkies-walkies aptes à communiquer entre eux. Pour simplifier la figure 1, seul un talkie-walkie 10 transporté par une personne 12 est représenté. Le talkie-walkie 10 est un talkie-walkie conventionnel quelconque. Ici, ce talkie-walkie est conforme à la norme PMR (Private Mobile Radio) 446 en vigueur en Europe. Cette norme est également connue sous la référence ETS 300 296. Dans ce cas, le talkie-walkie 10 utilise pour communiquer avec d'autres talkie-walkies des fréquences libres aux environs de 446 MHz. Plus précisément, cette norme définit huit canaux utilisables par les talkies-walkies compris entre 446,00625 MHz et 446,09375 MHz.

A cet effet, le talkie-walkie 10 comporte un émetteur-récepteur 16 radioélectrique apte à écouter et à recevoir des signaux audio sur l'un quelconque des huit canaux définis par la norme PMR 446. Le talkie-walkie 10 comprend également :
- un haut-parleur 18 pour transformer les signaux audio reçus sur un canal en un message vocal directement perceptible par la personne 12 transportant ce talkie-walkie, et
- un microphone 20 capable de transformer un message vocal prononcé par la personne 12 en un signal audio émis sur l'un des huit canaux définis par la norme PMR 446.

Typiquement, deux talkies-walkies en communication entre eux utilisent le même canal pour échanger leurs signaux audio. La communication entre ces deux talkies-walkies est donc réalisée en alternat. Une telle communication est également connue sous le terme anglais de « Half-duplex ». En effet, un talkie-walkie ne peut émettre et recevoir en même temps un signal audio sur un même canal. A cet effet, pour gérer l'alternat des communications, les talkies-walkies sont équipés d'un bouton, connu sous l'acronyme « PTT » (« Push To Talk »), actionnable manuellement par la personne transportant le talkie-walkie pour basculer, en alternance, entre :
- un mode où le talkie-walkie émet uniquement les signaux audio, et
- un mode où le talkie-walkie reçoit uniquement les signaux audio.

Le système 2 comprend également un talkie-walkie 24 logé à l'intérieur d'un véhicule 26 de secours. Sur la figure 1, le véhicule 26 est représenté par un simple carré en pointillés pour simplifier l'illustration. Par exemple, le véhicule 26 est un hélicoptère ou un véhicule tout terrain.

Le talkie-walkie 24 est par exemple identique au talkie-walkie 10 sauf qu'il comporte en plus une prise 28 raccordée par l'intermédiaire d'une liaison filaire 30 à un afficheur 32. Typiquement, la prise 28 est une prise « Jack » pour transmettre le signal audio reçu par le talkie-walkie 24 vers l'afficheur 32 via la liaison filaire 30.

L'afficheur 32 comprend un écran 34 apte à afficher des coordonnées GPS et un calculateur 36 raccordé à l'extrémité de la liaison filaire 30. Le calculateur 36 extrait les coordonnées GPS contenues dans un signal codé reçu par l'intermédiaire de la liaison 30 puis les affiche sur l'écran 34. Par exemple, les coordonnées GPS extraites sont affichées sous la forme de symboles ou sous la forme d'une position sur une carte géographique.

La liaison radio sans fil susceptible d'être établie entre la balise 4 et le talkie-walkie 10 porte la référence 38 sur la figure 1. La liaison radio sans fil susceptible d'être établie entre la balise 4 et le talkie-walkie 24 porte la référence 39. Il s'agira avantageusement d'une liaison utilisant un standard numérique tel que DPMR (Digital Private Mobile Radio). Les liaisons radio sont représentées par des flèches ondulées sur la figure 1.

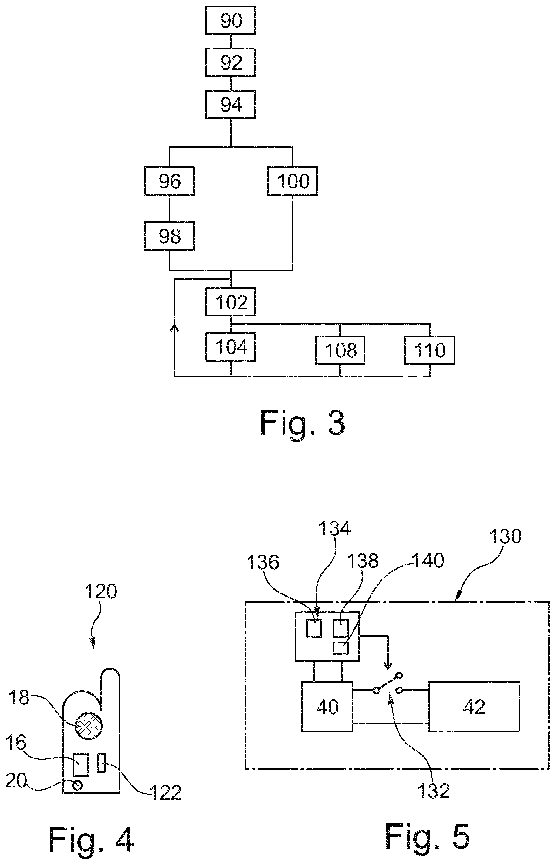

La figure 2 représente plus en détail la balise 4 qui est un exemple de balise utilisable avec le système de transmission d'alerte de la figure 1, ladite balise 4 n'étant pas une balise selon l'invention, mais ayant néanmoins des caractéristiques communes avec la balise 130 (figure 5) selon l'invention. La balise 4 comporte une source 40 d'alimentation électrique raccordée à un circuit 42 d'émission d'un signal d'alerte. Le circuit 42 est alimenté par la source 40 par l'intermédiaire d'une liaison filaire 44.

A titre d'illustration, la source 40 comporte un panneau photovoltaïque 46 et une pile 48. Le panneau photovoltaïque 46 permet de recharger la pile 48 à partir de l'énergie solaire. A cet effet, il est raccordé aux bornes de la pile 48 par l'intermédiaire d'un éventuel circuit 50 de contrôle de la charge de la pile 48.

La pile 48 est une pile de faible dimension. Par exemple, cette pile est apte à délivrer 1200 mA.h sous 3,6 V.

La liaison 44 comporte un interrupteur 52 commutable manuellement par la personne 6 entre une position de repos et une position active. Dans la position de repos, l'interrupteur 52 isole électriquement le circuit 42 de la source 40 de sorte que ce circuit 42 n'est pas alimenté. A l'inverse, dans la position active, l'interrupteur 52 raccorde électriquement le circuit 42 à la source 40 de sorte que le circuit 42 est alimenté et donc activé.

Par exemple, une partie de l'interrupteur 52 est mécaniquement raccordée à une poignée 54 du sac à dos 8. Cette poignée 54 est disposée sur le sac à dos 8 à un emplacement que la personne 6 peut facilement agripper en cas d'accident. Par exemple, la poignée 54 est logée sur une bretelle du sac à dos 8.

Quand la personne 6 tire sur la poignée 54, cela provoque la commutation de l'interrupteur 52, de sa position de repos vers sa position active.

Le circuit 42 comporte un module 62 de géo-localisation apte à mesurer la position géographique de la balise 4 avec une résolution inférieure à 500 m et, de préférence, inférieure à 100 m ou 20 m. Pour cela, typiquement, ce module 60 reçoit différents signaux de plusieurs satellites géostationnaires. Par exemple, le module 60 est un module GPS (Global Positioning System). Ce module 60 génère des coordonnées dans un format numérique codant la position de la balise 4 dans un système géodésique. Le système géodésique est par exemple le système géodésique WGS 84 (World Geodesic System 84). Les coordonnées au format numérique se présentent sous la forme d'une succession de symboles, chaque symbole correspondant à la valeur d'une des coordonnées dans le système géodésique utilisé. Par la suite, étant donné que le module 60 est décrit dans le cas particulier où celui-ci est un module GPS, ces coordonnées sont également appelées coordonnées GPS.

Le circuit 42 comporte aussi un microcontrôleur 62 programmable, apte à exécuter des instructions enregistrées dans une mémoire 64. La mémoire 64 comporte les instructions nécessaires pour exécuter le procédé de la figure 3. De plus, la mémoire 64 comporte une table 66 de correspondance associant à chaque symbole possible des coordonnées GPS, une transcription audio de ce symbole. La transcription audio d'un symbole est un morceau de signal audio apte à être restitué, par n'importe quel talkie-walkie conforme à la norme PMR 446, sous la forme d'un message vocal directement perceptible et compréhensible par un être humain. A cet effet, la transcription audio est identique au morceau de signal audio qui serait transmis par le talkie-walkie 10 si la personne 12 prononçait dans le microphone 20 le symbole associé à cette transcription audio. Ainsi, généralement, la transcription audio d'un symbole code une combinaison de fréquences correspondant à la prononciation de ce symbole par un être humain.

Le microcontrôleur 62 est raccordé à un module 68 de mise en forme audio, lui-même raccordé à l'entrée d'un émetteur 70. Ici, le module 68 convertit le signal d'alerte numérique généré par le microcontrôleur 62 en un signal audio transmis à l'entrée de l'émetteur 70. Par exemple, ce module 68 convertit le signal numérique reçu en un signal analogique.

L'émetteur 70 code et module le signal audio reçu sur son entrée pour le transmettre sur un canal sélectionné parmi les huit canaux possibles définis par la norme PMR 446. Ici, le canal sur lequel est émis le signal d'alerte est sélectionné par le microcontrôleur 62 par l'intermédiaire d'une liaison filaire 80.

Le circuit 42 comporte également un amplificateur 82 qui amplifie le signal radiofréquence d'alerte reçu avant qu'il soit rayonné par une antenne 84. L'antenne 84 est une antenne filaire ou une antenne tissée.

Par contre, pour minimiser son encombrement, la balise 4 ne comporte pas de haut-parleur, de microphone et d'écran. De préférence, la balise 4 ne comporte pas non plus de récepteur radioélectrique.

Le fonctionnement du système 2 va maintenant être décrit plus en détail en référence au procédé de la figure 3.

Lors d'une étape 90, en cas d'accident, la personne 6 tire sur la poignée 54. Cela déclenche la commutation de l'interrupteur 52 de sa position de repos vers sa position active. A partir de ce moment, le circuit 42 est alimenté et donc activé.

Ensuite, lors d'une étape 92, dès que le circuit 42 est activé, le module 60 de géo-localisation mesure la position de la balise 4 et génère des coordonnées GPS, dans un format numérique, correspondant à la position actuelle de cette balise. Par exemple, dans la suite de cette description, on considère que la position de la balise est la position suivante : 45°, 10' nord et 5°, 43' est.

Lors d'une étape 94, le microcontrôleur 62 acquiert les coordonnées GPS générées par le module 60.

Lors d'une étape 96, le microcontrôleur 62 recherche dans la table 66 la transcription audio associée à chacun des symboles des coordonnées GPS acquises.

Lors d'une étape 98, le microcontrôleur 62 produit un signal d'alerte vocal contenant la transcription audio de chaque symbole des coordonnées GPS à transmettre. Par exemple, ce signal d'alerte vocal est le suivant « à l'aide sur position 45° et 10' nord et 5° et 43' est ».

En parallèle des étapes 96 et 98, lors d'une étape 100, le microcontrôleur 62 génère également un message d'alerte codé dans lequel la position actuelle de la balise 4 est codée sans utiliser les transcriptions audio des symboles des coordonnées GPS. Par exemple, les coordonnées GPS sont codées dans ce signal à l'aide d'une modulation de fréquences ou d'une modulation temporelle ou d'une combinaison de ces deux modulations. Par exemple, on suppose ici qu'une modulation de fréquence MDF (Modulation par Déplacement de Fréquence) plus connue sous l'acronyme anglais de FSK (Frequency-Shift Keying) est utilisée ou encore tout autre modulation compatibles avec les standards numériques, par exemple avec le standard DPMR pour l'Europe.

Une fois que les messages d'alerte vocale et codé sont générés, lors d'une étape 102, le microcontrôleur 62 sélectionne un canal d'émission parmi les huit canaux définis par la norme PMR 446.

Ensuite, lors d'une étape 104, le module 68 met en forme le message d'alerte avant de le transmettre à l'émetteur 70. Ici, cette mise en forme consiste à réaliser une conversion numérique analogique.

Lors de l'étape 104, l'émetteur 70 code et module les signaux d'alerte vocal de la même façon que les signaux audio échangés entre les talkie-walkie. Ensuite, il émet les messages d'alerte vocal et codé successivement sur le canal sélectionné par l'intermédiaire des liaisons 38, 39.

Après un temps d'émission préprogrammé, le procédé revient à l'étape 102 où le microcontrôleur 62 sélectionne un autre canal pour émettre le message d'alerte vocal et le message d'alerte codé. Par exemple, le microcontrôleur 62 sélectionne le canal suivant dans l'ordre, puis quand le dernier canal est atteint, il revient au premier canal de manière à émettre en boucle les messages d'alerte sur les huit canaux disponibles.

En parallèle de l'étape 104, lors d'une étape 108, l'émetteur-récepteur 16 du talkie-walkie 10 écoute un canal. Quand le signal d'alerte vocal est émis sur ce canal, cet émetteur-récepteur le reçoit. Ensuite, ce signal d'alerte vocal est transformé en un message d'alerte vocal directement perceptible et compréhensible par la personne 12 par le haut-parleur 18. Ainsi, la personne 12 entend la phrase suivante « à l'aide sur position 45° et 10' nord et 5° et 43' est ». La personne 12 peut alors se diriger vers la personne 6 pour la secourir ou prévenir des services de secours et leur fournir la position entendue.

En parallèle des étapes 104 et 108, lors d'une étape 110, l'émetteur-récepteur du talkie-walkie 24 reçoit également les signaux d'alerte. Ce talkie-walkie 24 transmet les signaux reçus à l'afficheur 32 par l'intermédiaire de la liaison 30. Si le signal audio reçu est un message d'alerte codé, le calculateur 36 décode les coordonnées GPS contenues dans le message d'alerte codé puis commande l'affichage de ces coordonnées sur l'écran 34. Les coordonnées reçues sont mémorisées et affichées en continu sur l'écran 34. Cela facilite l'intervention des services de secours.

La figure 4 représente un talkie-walkie 120 identique au talkie-walkie 10 sauf que celui-ci comporte en plus un module 122 apte à relayer automatiquement le signal d'alerte vocal et le signal d'alerte codé. Plus précisément, ce module 122 détecte si le signal audio reçu comporte un identifiant RR spécifique indiquant que le signal audio reçu est à rediffuser automatiquement. Uniquement lorsque le signal audio reçu comporte cet identifiant RR, le module 122 commande alors l'émetteur-récepteur 16 pour retransmettre automatiquement le signal audio reçu sur le même canal ou sur un autre canal.

Le talkie-walkie 120 est avantageusement utilisé dans le système 2 à la place du talkie-walkie 10 ou en plus du talkie-walkie 10. Dans ce cas, le fonctionnement du système 2 est identique à ce qui a été décrit en référence à la figure 3 sauf que le circuit 42 incorpore dans chaque signal d'alerte l'identifiant RR. Dans ces conditions, quand le talkie-walkie 120 reçoit le signal d'alerte, il le retransmet immédiatement et automatiquement par l'intermédiaire de son émetteur-récepteur 16. Ainsi, le signal d'alerte peut être transmis de proche en proche jusqu'à un talkie-walkie d'une personne se trouvant dans une zone de couverture du réseau téléphonique cellulaire. Cette personne peut appeler les secours avec son téléphone cellulaire.

La figure 5 représente une balise 130 d'alerte selon l'invention, dentique à la balise 4 sauf que l'interrupteur 52 est remplacé par un interrupteur 132 dont la commutation entre les positions de repos et la position active est commandable par un signal de commande électrique. De plus, cette balise 130 comporte un module 134 de détection automatique d'un accident. Ce module 134 est apte à détecter automatiquement un accident et, en réponse, à commander automatiquement la commutation de l'interrupteur 132 vers sa position active. A cet effet, le module 134 peut comporter différents capteurs. Par exemple, dans un mode de réalisation, le module 134 comporte un accéléromètre 136. Si l'accélération mesurée par cet accéléromètre 136 dépasse un seuil prédéterminé S₁, alors le module 134 commande automatiquement la commutation de l'interrupteur 132 vers sa position active. En effet, une accélération violente signifie que la balise 4 a subi un choc important, ce qui permet de détecter un accident.

En plus ou à la place de l'accéléromètre 136, le module 134 comporte un capteur 138 d'inclinaison par rapport à la verticale et un capteur 140 apte à détecter la présence du sac à dos sur les épaules de la personne 6. Si, simultanément et pendant une durée prédéterminée, le capteur 138 détecte une position allongée du sac à dos et, en même temps, le capteur 140 indique que le sac à dos 8 est sur les épaules de la personne 6, alors le module 134 commande automatiquement la commutation de l'interrupteur 132 vers sa position active.

Dans un autre mode de réalisation, la personne 12 peut également comporter un appareil équipé d'un module de reconnaissance vocale et d'un module de cartographie. Par exemple, cet appareil est un est un ordiphone, plus connu sous le terme de « Smartphone ». Lorsqu'un signal d'alerte vocal est reçu, la personne 12 place son appareil à proximité du haut-parleur 18 du talkie-walkie 10 et active le module de reconnaissance vocal. Le module de reconnaissance vocale transforme alors automatiquement les coordonnées GPS contenues dans le message vocal en coordonnées numériques, et il transmet automatiquement ces coordonnées numériques au module de cartographie. Le module de cartographie affiche alors sur une carte présentée sur un écran de l'appareil la position correspondant aux coordonnées GPS contenues dans le message d'alerte vocal. Cette variante permet ainsi directement le guidage vers la victime.

Dans le contexte secours une autre possibilité consiste à relier le Talkie Walkie avec un Smartphone par un simple cordon audio muni de jacks.

Une autre solution consiste à réaliser une clé électronique amovible ou « dongle » en anglais, apte à recevoir directement les signaux émis par la balise 4. Cette clé est connectée directement sur le Smartphone afin de permettre, comme dans les modes de réalisation précédent, l'utilisation des fonctions du Smartphone, et notamment le module cartographie, pour faciliter le guidage vers la victime. La clé électronique est par exemple connectée au Smartphone par l'intermédiaire d'un port USB (Universal Serial Bus).

Ce qui a été précédemment décrit dans le cas particulier où les talkies-walkies sont conformes à la norme PMR 446 peut facilement être transposé à d'autres normes d'émission sur d'autres canaux libres d'émission. Par exemple, les normes suivantes peuvent être utilisées en lieu et place de la norme PMR 446 :
- la norme américaine FRS (Family Radio Service) qui définit 14 canaux compris entre 462,5625 MHz et 467,7125 MHz,
- la norme LPD (Low Power Device) qui utilise 69 canaux compris entre 433,075 MHz et 434,775 MHz,
- la bande VHF - SNDSM (Very High Frequency - Système Mondial de Détresse et de Sécurité en Mer) qui utilise une bande libre de fréquence comprise entre 156 et 162 MHz,
- la norme CB (Citizen's Band) qui utilise 40 canaux libres compris entre 26,965 MHz et 27,405 MHz en Europe ou aux USA où des fréquences comprises dans une bande proche de 49 MHz aux Etats-Unis,

La norme correspondant, au Japon, au service similaire appelé « Tokutei Shoudenryoku Musen » ou « Specified Low Power Radio (SLPR) » et déployé autour de 422 MHZ avec une limitation en puissance de 10 mW, peut aussi être utilisée. Il y a onze canaux compris entre 422.0500 et 422.1750MHz pour un usage professionnelle et dix canaux compris entre 422.200 et 422.300MHz pour un usage dans les activités de loisir.

Les signaux audio transmis entre la balise et les talkies-walkies ou entre les talkies-walkies entre eux peuvent être des signaux audio analogiques ou numériques.

Les transcriptions audio de chaque symbole susceptible d'être utilisé dans les coordonnées GPS sont par exemple obtenues en réalisant une synthèse vocale de chacun de ces symboles, puis en transmettant le message vocal ainsi obtenu sur l'entrée du microphone 20 du talkie-walkie 10, et enfin en enregistrant, dans la table 66, le signal audio correspondant à ce symbole généré par le talkie-walkie 10 en entrée de l'émetteur-récepteur 16.

La source 40 d'alimentation peut être dépourvue de panneau photovoltaïque pour recharger la pile 48.

En variante, le message d'alerte codé est émis uniquement sur un seul et même canal prédéterminé à l'avance et n'est pas transmis sur les autres canaux. Dans ce cas, le talkie-walkie 24 est uniquement réglé pour recevoir les signaux audio transmis sur ce canal prédéterminé.

Dans une autre variante, le circuit 44 ne transmet pas de signaux d'alerte codés mais uniquement des signaux d'alerte vocaux. Dans ce cas, l'afficheur 32 est équipé d'un module de reconnaissance vocal apte à transformer les coordonnées contenues dans le signal d'alerte vocal en des coordonnées numériques affichables sur l'écran 34.

Dans une autre variante, le talkie-walkie 24 et l'afficheur 32 sont omis.

## Revendications

1. Un système de transmission d'alerte apte à fonctionner en absence de réseau cellulaire comportant :
- au moins un talkie-walkie (10, 24) apte à être transporté directement par un être humain, ce talkie-walkie comprenant :
• un émetteur-récepteur radioélectrique (16) apte à écouter directement au moins un canal utilisé pour échanger en alternat des signaux audio avec d'autres talkies-walkies, et
• un haut-parleur (18) apte à transformer le signal audio reçu sur ce canal en un message vocal directement perceptible par un être humain qui transporte ce talkie-walkie,
- une balise (130) d'alerte directement transportable par un être humain, différent de celui transportant le talkie-walkie, lors d'une activité en plein air, cette balise comprenant :
• un module (60) de géo-localisation apte à générer des coordonnées, sous la forme d'une succession de symboles numériques, correspondant à la position actuelle de la balise sur la surface terrestre avec une résolution inférieure à 500 m,
• un circuit (42) d'émission apte à produire un signal d'alerte contenant les coordonnées générées et à transmettre ce signal d'alerte produit sous la forme d'un signal audio sur le même canal que celui utilisé par le talkie-walkie, et
• un module (134) de détection automatique d'un accident apte à déclencher automatiquement la transmission, par le circuit d'émission, du signal d'alerte en réponse à la détection d'un accident,
**caractérisé en ce que** :
- le système comporte un sac à dos, la balise d'alerte étant fixée sans aucun degré de liberté à une paroi de ce sac à dos,
- le circuit (42) d'émission comporte :
• une mémoire (64) contenant, pour chaque symbole des coordonnées générées, une transcription audio de ce symbole, et
• un microcontrôleur (62) apte à introduire dans le signal d'alerte produit, les transcriptions audio, enregistrées dans la mémoire, correspondant à chaque symbole des coordonnées générées de manière à ce que les coordonnées générées puissent être restituées sous la forme d'un message vocal directement perceptible et compréhensible par un utilisateur d'un talkie-walkie quelconque ayant reçu ce message sur un canal écouté,
- le module (134) de détection comporte un premier capteur (138) d'inclinaison par rapport à la verticale et un second capteur (140) apte à détecter la présence du sac à dos sur les épaules de l'être humain, et
- le module (134) de détection est conçu pour détecter un accident si, simultanément et pendant une durée prédéterminée, le premier capteur (138) détecte une position allongée du sac à dos et, en même temps, le second capteur (140) indique que le sac à dos (8) est sur les épaules de l'être humain.

2. Le système selon la revendication 1, dans lequel le système comporte en plus un module de cartographie apte à recevoir du talkie-walkie le signal d'alerte et à afficher sur une carte la position correspondant aux coordonnées contenues dans ce message d'alerte.

3. Le système selon la revendication 1, dans lequel le système comporte
- un module de cartographie apte à afficher sur une carte la position correspondant aux coordonnées contenues dans le message d'alerte, et
- une clé électronique amovible apte à recevoir directement le message d'alerte émis par la balise, cette clé étant apte à être connectée et, en alternance, déconnectée du module de cartographie de façon réversible.

4. Une balise (130) d'alerte pour un système conforme à l'une quelconque des revendications précédentes, cette balise étant directement transportable par un être humain lors d'une activité en plein air, cette balise comprenant :
- un module (60) de géo-localisation apte à générer des coordonnées, sous la forme d'une succession de symboles numériques, correspondant à la position actuelle de la balise sur la surface terrestre avec une résolution inférieure à 500 m,
- un circuit (42) d'émission apte à produire un signal d'alerte contenant les coordonnées générées et à transmettre ce signal d'alerte produit sous la forme d'un signal audio sur le même canal que celui utilisé par le talkie-walkie, et
- un module (134) de détection automatique d'un accident apte à déclencher automatiquement la transmission, par le circuit d'émission, du signal d'alerte en réponse à la détection d'un accident,
**caractérisé en ce que** :
- la balise d'alerte est apte à être fixée sans aucun degré de liberté à une paroi d'un sac à dos,
- le circuit (42) d'émission comporte :
• une mémoire (64) contenant, pour chaque symbole des coordonnées générées, une transcription audio de ce symbole, et
• un microcontrôleur (62) apte à introduire dans le signal d'alerte produit, les transcriptions audio, enregistrées dans la mémoire, correspondant à chaque symbole des coordonnées générées de manière à ce que les coordonnées générées puissent être restituées sous la forme d'un message vocal directement perceptible et compréhensible par un utilisateur d'un talkie-walkie quelconque ayant reçu ce message sur un canal écouté,
- le module (134) de détection comporte un premier capteur (138) d'inclinaison par rapport à la verticale et un second capteur (140) apte à détecter la présence du sac à dos sur les épaules de l'être humain, et
- le module (134) de détection est conçu pour détecter un accident si, simultanément et pendant une durée prédéterminée, le premier capteur (138) détecte une position allongée du sac à dos et, en même temps, le second capteur (140) indique que le sac à dos (8) est sur les épaules de l'être humain.

5. La balise selon la revendication 4, dans laquelle la balise d'alerte comprend :
- un interrupteur (132) commutable par un signal de commande électrique entre :
• une position de repos dans laquelle l'interrupteur (132) sole électriquement le circuit (42) d'émission d'une source (40) d'alimentation électrique de sorte que ce circuit (42) d'émission n'est pas alimenté, et
• une position active dans laquelle l'interrupteur (132) accorde électriquement le circuit (42) d'émission à la source (40) d'alimentation électrique de sorte que le circuit (42) d'émission est alimenté et donc activé, et
- en réponse à la détection d'un accident, le module (134) de détection est apte à commander automatiquement la commutation de l'interrupteur (132) vers sa position active.

6. La balise selon la revendication 4 ou 5, dans laquelle le module de détection comprend un capteur (136) d'accélération et ce module de détection est apte à déclencher automatiquement la transmission, par le circuit d'émission, du signal d'alerte en réponse au franchissement par l'accélération mesurée d'un seuil prédéterminé.

7. La balise selon l'une quelconque des revendications 4 à 6, dans laquelle le circuit (42) d'émission du signal d'alerte est programmé pour transmettre automatiquement, en alternance, le signal d'alerte sur chacun des canaux susceptibles d'être écoutés par le talkie-walkie.

8. La balise selon l'une quelconque des revendications 4 à 7, dans laquelle le circuit (42) d'émission du signal d'alerte est programmé pour réitérer automatiquement plusieurs fois la transmission du signal d'alerte sur un même canal.

9. La balise selon l'une quelconque des revendications 4 à 8, dans laquelle le circuit d'émission est apte à émettre le signal d'alerte dans au moins l'une des bandes de fréquences suivantes :
- la bande de 446,00625 MHz à 446,09375 MHz définie par la norme PMR (Private Mobile Radio) 446,
- la bande de 433,075 MHz à 434,775 MHz définie par la norme LPD (Low Power Device),
- la bande de 462,5625 MHz à 467,7125 MHz définie par la norme FRS (Family Radio Service),
- la bande de 26,965 MHz à 27,405 MHz définie par la norme CB (Citizen's Band),
- la bande de 422,200 MHz à 422,300 MHz et de 422,0500 MHz à 422,1750 MHz définie pour le service « Tokutei Shoudenryoku Musen » au Japon.

10. La balise selon l'une quelconque des revendications 4 à 9, dans laquelle la balise d'alerte est dépourvue de microphone, de haut-parleur et d'écran.

11. Sac à dos, **caractérisé en ce que** le sac à dos (8) comporte une balise d'alerte conforme à l'une quelconque des revendications 4 à 10, fixée sans aucun degré de liberté à une paroi de ce sac à dos.

## Patentansprüche

1. Alarmübertragungssystem, das in Abwesenheit eines zellularen Netzes arbeiten kann, das aufweist:
- mindestens ein Walkie-Talkie (10, 24), das direkt von einem Menschen mitgeführt werden kann, wobei dieses Walkie-Talkie enthält:
• einen Funk-Sender/Empfänger (16), der mindestens einen Kanal direkt abhören kann, der verwendet wird, um im Wechsel Tonsignale mit anderen Walkies-Talkies auszutauschen, und
• einen Lautsprecher (18), der das auf diesem Kanal empfangene Tonsignal in eine Sprachnachricht umwandeln kann, die direkt von einem dieses Walkie-Talkie mitführenden Menschen gehört werden kann,
- eine Alarmbake (130), die direkt von einem Menschen anders als der das Walkie-Talkie mitführende bei einer Tätigkeit im Freien mitgeführt werden kann, wobei diese Bake enthält:
• ein Geolokalisierungsmodul (60), das Koordinaten in Form einer Folge numerischer Symbole generieren kann, die der aktuellen Position der Bake auf der Erdoberfläche mit einer Auflösung von weniger als 500 m entsprechen,
• einen Sendeschaltkreis (42), der ein die generierten Koordinaten enthaltendes Alarmsignal erzeugen und dieses erzeugte Alarmsignal in Form eines Tonsignals auf dem gleichen Kanal übertragen kann wie derjenige, der vom Walkie-Talkie genutzt wird, und
• ein Modul (134) zur automatischen Erfassung eines Unfalls, das als Reaktion auf die Erfassung eines Unfalls automatisch die Übertragung des Alarmsignals durch den Sendeschaltkreis auslösen kann,
**dadurch gekennzeichnet, dass**:
- das System einen Rucksack aufweist, wobei die Alarmbake ohne jeden Freiheitsgrad an einer Wand dieses Rucksacks befestigt ist,
- der Sendeschaltkreis (42) aufweist:
• einen Speicher (64), der für jedes Symbol der generierten Koordinaten eine Tonumsetzung dieses Symbols enthält, und
• einen Mikrokontroller (62), der die im Speicher gespeicherten Tonumsetzungen entsprechend jedem Symbol der generierten Koordinaten in das erzeugte Alarmsignal einfügen kann, damit die generierten Koordinaten in Form einer Sprachnachricht wiedergegeben werden können, die für einen Benutzer eines beliebigen Walkie-Talkies, das diese Nachricht auf einem abgehörten Kanal empfangen hat, direkt wahrnehmbar und verständlich sind,
- das Erfassungsmodul (134) einen ersten Sensor (138) der Neigung bezüglich der Senkrechten und einen zweiten Sensor (140) aufweist, der das Vorhandensein des Rucksacks auf den Schultern des Menschen erfassen kann, und
- das Erfassungsmodul (134) konzipiert ist, einen Unfall zu erfassen, wenn gleichzeitig und während einer vorbestimmten Daher der erste Sensor (138) eine liegende Position des Rucksacks erfasst und zur gleichen Zeit der zweite Sensor (140) anzeigt, dass der Rucksack (8) sich auf den Schultern des 'Menschen befindet.

2. System nach Anspruch 1, wobei das System außerdem ein Kartographiemodul aufweist, das das Alarmsignal vom Walkie-Talkie empfangen und die Position entsprechend den in dieser Alarmnachricht enthaltenen Koordinaten auf einer Karte anzeigen kann.

3. System nach Anspruch 1, wobei das System aufweist
- ein Kartographiemodul, das die Position entsprechend den in der Alarmnachricht enthaltenen Koordinaten auf einer Karte anzeigen kann, und
- einen entfernbaren elektronischen Schlüssel, der die von der Bake gesendete Alarmnachricht direkt empfangen kann, wobei dieser Schlüssel umkehrbar abwechselnd mit dem Kartographiemodul verbunden und von ihm getrennt werden kann.

4. Alarmbake (130) für ein System nach einem der vorhergehenden Ansprüche, wobei diese Bake von einem Menschen bei einer Tätigkeit im Freien direkt mitgeführt werden kann, wobei diese Bake enthält:
- ein Geolokalisierungsmodul (60), das Koordinaten in Form einer Folge numerischer Symbole generieren kann, die der aktuellen Position der Bake auf der Erdoberfläche mit einer Auflösung von weniger als 500 m entsprechen,
- einen Sendeschaltkreis (42), der ein die generierten Koordinaten enthaltendes Alarmsignal erzeugen und dieses erzeugte Alarmsignal in Form eines Tonsignals auf dem gleichen Kanal übertragen kann wie derjenige, der vom Walkie-Talkie genutzt wird, und
- ein Modul (134) zur automatischen Erfassung eines Unfalls, das als Reaktion auf die Erfassung eines Unfalls automatisch die Übertragung des Alarmsignals durch den Sendeschaltkreis auslösen kann,
**dadurch gekennzeichnet, dass**:
- die Alarmbake ohne jeden Freiheitsgrad an einer Wand eines Rucksacks befestigt werden kann,
- der Sendeschaltkreis (42) aufweist:
» einen Speicher (64), der für jedes Symbol der generierten Koordinaten eine Tonumsetzung dieses Symbols enthält, und
» einen Mikrokontroller (62), der die im Speicher gespeicherten Tonumsetzungen entsprechend jedem Symbol der generierten Koordinaten in das erzeugte Alarmsignal einfügen kann, damit die generierten Koordinaten in Form einer Sprachnachricht wiedergegeben werden können, die für einen Benutzer eines beliebigen Walkie-Talkies, das diese Nachricht auf einem abgehörten Kanal empfangen hat, direkt wahrnehmbar und verständlich sind,
- das Erfassungsmodul (134) einen ersten Sensor (138) der Neigung bezüglich der Senkrechten und einen zweiten Sensor (140) aufweist, der das Vorhandensein des Rucksacks auf den Schultern des Menschen erfassen kann, und
- das Erfassungsmodul (134) konzipiert ist, einen Unfall zu erfassen, wenn der erste Sensor (138) gleichzeitig und während einer vorbestimmten Dauer eine liegende Position des Rucksacks erfasst und zur gleichen Zeit der zweite Sensor (140) anzeigt, dass der Rucksack (8) sich auf den Schultern des Menschen befindet.

5. Bake nach Anspruch 4, wobei die Alarmbake enthält:
- einen Schalter (132), der von einem elektrischen Steuersignal umgeschaltet werden kann zwischen:
• einer Ruhestellung, in der der Schalter (132) den Sendeschaltkreis (42) elektrisch von einer Stromversorgungsquelle (40) isoliert, damit dieser Sendeschaltkreis (42) nicht versorgt wird, und
• einer aktiven Stellung, in der der Schalter (132) den Sendeschaltkreis (42) elektrisch an die Stromversorgungsquelle (40) anschließt, damit der Sendeschaltkreis (42) versorgt und somit aktiviert wird, und
- das Erfassungsmodul (134) als Reaktion auf die Erfassung eines Unfalls automatisch die Umschaltung des Schalters (132) in seine aktive Stellung steuern kann.

6. Bake nach Anspruch 4 oder 5, wobei das Erfassungsmodul einen Beschleunigungssensor (136) enthält, und dieses Erfassungsmodul die Übertragung des Alarmsignals durch den Sendeschaltkreis als Reaktion auf eine Überschreitung einer vorbestimmten Schwelle durch die gemessene Beschleunigung auslösen kann.

7. Bake nach einem der Ansprüche 4 bis 6, wobei der Sendeschaltkreis (42) des Alarmsignals programmiert ist, im Wechsel automatisch das Alarmsignal auf jedem der Kanäle zu übertragen, die vom Walkie-Talkie abgehört werden können.

8. Bake nach einem der Ansprüche 4 bis 7, wobei der Sendeschaltkreis (42) des Alarmsignals programmiert ist, die Übertragung des Alarmsignals auf einem gleichen Kanal automatisch mehrmals zu wiederholen.

9. Bake nach einem der Ansprüche 4 bis 8, wobei der Sendeschaltkreis das Alarmsignal in mindestens einem der folgenden Frequenzbänder senden kann:
- das Band von 446,00625 MHz bis 446,09375 MHz, definiert durch die Norm PMR (Private Mobile Radio) 446,
- das Band von 433,075 MHz bis 434,775 MHz, definiert durch die Norm LPD (Low Power Device),
- das Band von 462,5625 MHz bis 467,7125 MHz, definiert durch die Norm FRS (Family Radio Service),
- das Band von 26,965 MHz bis 27,405 MHz, definiert durch die Norm CB (Citizen's Band),
- das Band von 422,200 MHz bis 422,300 MHz, und von 422,0500 MHz bis 422,1750 MHz definiert für den Dienst « Tokutei Shoudenryoku Musen » in Japan.

10. Bake nach einem der Ansprüche 4 bis 9, wobei die Alarmbake kein Mikrofon, Lautsprecher und Bildschirm aufweist.

11. Rucksack, **dadurch gekennzeichnet, dass** der Rucksack (8) eine Alarmbake nach einem der Ansprüche 4 bis 10 aufweist, die ohne jeden Freiheitsgrad an einer Wand dieses Rucksacks befestigt ist.

## Claims

1. Distress alert system able to operate in absence of a cellular network, this system comprising:
- at least one walkie-talkie (10, 24) able to be transported directly by a human being, this walkie-talkie comprising:
• an electromagnetic transceiver (16) able to listen directly to at least one channel used to exchange in half-duplex mode audio signals with other walkie-talkies, and
• a loudspeaker (18) able to convert the audio signal received on this channel into a voice message that is directly perceivable by a human being transporting this walkie-talkie,
- a distress beacon (130) that is directly transportable by a human being, different from the one transporting the walkie-talkie, during an open-air activity, this beacon comprising:
• a geo-positioning module (60) able to generate coordinates, in the form of a succession of numerical symbols, corresponding to the current position of the beacon on the Earth's surface with a resolution better than 500 m,
• a send circuit (42) able to produce a distress signal containing the generated coordinates and to transmit this produced distress signal in the form of an audio signal over the same channel as that used by the walkie-talkie, and
• a module (134) for automatically detecting an accident, able to automatically trigger the transmission, by the send circuit, of the distress signal in response to the detection of an accident,
**characterized in that**
- the system comprises a backpack, the distress beacon being fastened with no degree of freedom to a wall of this backpack,
- the send circuit (42) comprises:
• a memory (64) containing, for each symbol of the generated coordinates, an audio transcription of this symbol, and
• a microcontroller (62) able to introduce, into the produced distress signal, the audio transcriptions, stored in the memory, corresponding to each symbol of the generated coordinates so that the generated coordinates can be rendered in the form of a voice message directly perceivable and comprehensible by a user of any walkie-talkie that receives this message on a channel being listened to,
- the detecting module (134) comprises a first sensor (138) of inclination with respect to vertical and a second sensor (140) able to detect the presence of the backpack on the shoulders of the human being, and
- the detecting module (134) is designed to detect an accident if, simultaneously and for a preset duration, the first sensor (138) detects that the backpack is in a laid-down position and, at the same time, the second sensor (140) indicates that the backpack (8) is on the shoulders of the human being.

2. System according to Claim 1, wherein the system in addition comprises a mapping module able to receive, from the walkie-talkie, the distress signal and to display, on a map, the position corresponding to the coordinates contained in this distress message.

3. System as claimed in claim 1, wherein the system comprises
- a mapping module able to display, on a map, the position corresponding to the coordinates contained in the distress message, and
- a dongle able to directly receive the distress message sent by the beacon, this dongle being able to be connected and, alternately, disconnected from the mapping module reversibly.

4. Distress beacon (130) for a system according to any one of the preceding claims, this beacon being directly transportable by a human being during an open-air activity, this beacon comprising:
- a geo-positioning module (60) able to generate coordinates, in the form of a succession of numerical symbols, corresponding to the current position of the beacon on the Earth's surface with a resolution better than 500 m,
- a send circuit (42) able to produce a distress signal containing the generated coordinates and to transmit this produced distress signal in the form of an audio signal over the same channel as that used by the walkie-talkie, and
- a module (134) for automatically detecting an accident, able to automatically trigger the transmission, by the send circuit, of the distress signal in response to the detection of an accident,
**characterized in that**
- the distress beacon is able to be fastened with no degree of freedom to a wall of a backpack,
- the send circuit (42) comprises:
• a memory (64) containing, for each symbol of the generated coordinates, an audio transcription of this symbol, and
• a microcontroller (62) able to introduce, into the produced distress signal, the audio transcriptions, stored in the memory, corresponding to each symbol of the generated coordinates so that the generated coordinates can be rendered in the form of a voice message directly perceivable and comprehensible by a user of any walkie-talkie that receives this message on a channel being listened to,
- the detecting module (134) comprises a first sensor (138) of inclination with respect to vertical and a second sensor (140) able to detect the presence of the backpack on the shoulders of the human being, and
- the detecting module (134) is designed to detect an accident if, simultaneously and for a preset duration, the first sensor (138) detects that the backpack is in a laid-down position and, at the same time, the second sensor (140) indicates that the backpack (8) is on the shoulders of the human being.

5. Beacon according to Claim 4, wherein the distress beacon comprises:
- a switch (132) that is switchable by an electrical control signal between:
• a rest position in which the switch (132) electrically insulates the send circuit (42) from an electrical power source (40) so that this send circuit (42) is not powered, and
• an active position in which the switch (132) electrically connects the send circuit (42) to the electrical power source (40) so that the send circuit (42) is powered and therefore activated, and
- in response to the detection of an accident, the detecting module (134) is able to automatically switch the switch (132) to its active position.

6. Beacon according to Claim 4 or 5, wherein the detecting module comprises an acceleration sensor (136) and this detecting module is able to automatically trigger the transmission, by the send circuit, of the distress signal in response to the measured acceleration crossing a preset threshold.

7. Beacon according to any one of Claims 4 to 6, wherein the circuit (42) for sending the distress signal is programmed to automatically transmit, in alternation, the distress signal on each of the channels capable of being listened to by the walkie-talkie.

8. Beacon according to any one of Claims 4 to 7, wherein the circuit (42) for sending the distress signal is programmed to automatically reiterate the transmission of the distress signal over a given channel a plurality of times.

9. Beacon according to any one of Claims 4 to 8, wherein the send circuit is able to send the distress signal in at least one of the following frequency bands:
- the band 446.00625 MHz to 446.09375 MHz defined by the standard PMR446 (PMR being the acronym of Private Mobile Radio),
- the band 433.075 MHz to 434.775 MHz defined by the LPD standard (LPD being the acronym of Low Power Device),
- the band 462.5625 MHz to 467.7125 MHz defined by the FRS standard (FRS being the acronym of Family Radio Service),
- the band 26.965 MHz to 27.405 MHz defined by the CB standard (CB being the acronym of Citizen's Band),
- the bands 422.200 MHz to 422.300 MHz and 422.0500 MHz to 422.1750 MHz defined for the "Tokutei Shoudenryoku Musen" service in Japan.

10. Beacon according to any one of Claims 4 to 9, wherein the distress beacon is devoid of microphone, of loudspeaker and of display.

11. Backpack, **characterized in that** the backpack (8) comprises a distress beacon according to any one of Claims 4 to 10, fastened with no degree of freedom to a wall of this backpack.
